# EUROPÄISCHE PATENTSCHRIFT

(11) **EP 1 152 517 B1**
(45) Veröffentlichungstag und Bekanntmachung des Hinweises auf die Patenterteilung: **22.07.2009**
(21) Anmeldenummer: 01810397.8
(22) Anmeldetag: 24.04.2001
(51) Int. Cl.: H02M 3/158, H02M 1/00

(54) **Gleichstrompspeiseschaltung für Induktivitäten**
DC supply circuit for inductors
Circuit d'alimentation en courant continu pour inducteurs

(30) Priorität: 04.05.2000 DE 10021785
(43) Veröffentlichungstag der Anmeldung: 07.11.2001
(73) Patentinhaber: HILTI Aktiengesellschaft, 9494 Schaan (LI)
(72) Erfinder: Millauer, Wolfgang, 81249 München (DE)
(74) Vertreter: Wildi, Roland

(56) Entgegenhaltungen:
- DE-A- 2 402 317
- DE-A- 19 709 264
- PATENT ABSTRACTS OF JAPAN vol. 013, no. 128 (E-735), 29. März 1989 (1989-03-29) -& JP 63 294297 A (HITACHI ELECTRONICS ENG CO LTD), 30. November 1988 (1988-11-30)
- LE-HUY H ET AL: "Unipolar converters for switched reluctance motors" CONFERENCE PROCEEDINGS ARTICLE, 1. Oktober 1989 (1989-10-01), Seiten 551-560, XP010090980

## Beschreibung

Die Erfindung betrifft eine Gleichstromspeiseschaltung für Induktivitäten in Form einer Brückenschaltung mit einem Gleichrichter mit Glättungskondensator über der einen, ersten Brückendiagonale und einer induktiven Last über der anderen, zweiten Brückendiagonale, wobei die beiden zwischen dem positiven und dem negativen Pol des Glättungskondensators liegenden Halbbrückenzweige einerseits aus der Reihenschaltung eines ersten steuerbaren Ventils und einer bezüglich einer Stromflussrichtung in Sperrrichtung liegenden ersten Diode und andererseits aus einem zweiten Ventil und einer zweiten hinsichtlich der Stromflussrichtung ebenfalls in Sperrrichtung liegenden Diode bestehen. Eine Gleichstromspeiseschaltung dieser Gattung eignet sich insbesondere als netzgespeister Gleichstromsteller für im Prinzip beliebige Induktivitäten.

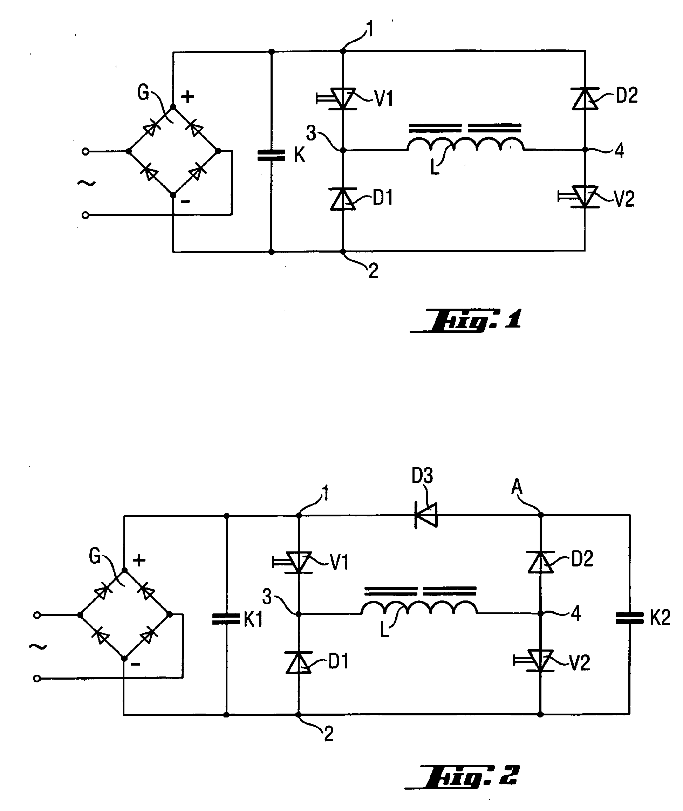

Eine unter dem Namen H-Brücke bekannte Schaltung (vergleiche Fig. 1 der beigefügten Zeichnung) geht von einer gleichgerichteten und gegebenenfalls mittels eines Kondensators K geglätteten Netzspannung aus und besteht im Prinzip aus zwei gesteuerten Ventilen, z. B. Halbleiterschaltern V1 und V2, sowie zwei ungesteuerten Dioden D1 und D2. Der Anschluss der aus einem Netz erzeugten sogenannten "Zwischenkreisspannung" erfolgt - wie in Fig. 1 gezeigt - an einer ersten Brückendiagonale an den Anschlusspunkten 1 und 2. Eine induktive Last L liegt über der anderen Brückendiagonale zwischen den Anschlusspunkten 3 und 4. Als Last L ist jede Art von gleichstromgespeister Induktivität, wie eine Magnetventilspule oder auch eine Motorfeldspule, vorstellbar.

Bekanntermaßen ist die Kapazität des Glättungskondensators K vergleichsweise groß auszulegen, da dieser Kondensator grundsätzlich zwei unterschiedliche Funktionen hat: Er dient einerseits der Verringerung der von der Netzgleichrichtung verursachten Welligkeit der gewonnenen Gleichspannung und hat davon völlig unabhängig die Funktion, die nach jedem Abschalten beider Halbleiterschalter V1, V2 über die beiden Dioden D1, D2 in den Zwischenkreis rückgespeiste magnetische Energie, die sogenannte "Abmagnetisierungsenergie" der Last L (Spule) aufzunehmen. Diese Doppelfunktion hat zur Folge, dass bei der Dimensionierung des Kondensators K auf beide Funktionen oder Aufgaben geachtet werden muss. Es kann auch dann, wenn von der Gesamtfunktion her eine relativ große Welligkeit im Zwischenkreis oder gar eine ungeglättete Zwischenkreisspannung akzeptabel oder auch zur Minimierung von Stromoberwellen im Netz notwendig wäre, der Kondensator K nie kleiner gemacht werden als zur Aufnahme der magnetischen Energie bei noch akzeptabler Spannungserhöhung erforderlich.

Aus der Druckschrift DE 197 09 264 A1 (vergleiche insbesondere dortige Fig. 1) ist eine Schaltungsanordnung zur Reduzierung von Rückwirkungen auf den zeitlichen Verlauf des einem Netz entnommenen Stroms bei induktiver Last, beispielsweise eine Motorwicklung über einen Gleichrichter mittels aktiver Filterung der Harmonischen einer Netzgrundschwingung über einen sogenannten Boostkonverter bekannt, bei dem durch geeignete, pulsbreitenmodulierte Steuerung eines weiteren, dritten Halbleiterschalters und eines parallel zum Abmagnetisierungsventil der Diode D1 und dem zweiten gesteuerten Halbleiterschalter V2 der Schaltung nach Fig. 1 liegenden Kondensators, der die Abmagnetisierungsenergie der induktiven Last L übernimmt, eine Verkleinerung einer sonst erforderlichen größeren sogenannten Hochsetzstellerdrossel möglich wird. Der zusätzliche Kondensator hat ausschließlich die Funktion einer Zwischenspeicherung der Abmagnetisierungsenergie aus der Induktivität.

Der Erfindung liegt die Problemstellung zugrunde einerseits die Netzrückwirkungen als auch andererseits die Größe der Glättungskapazität K deutlich zu reduzieren.

Die der Erfindung zugrunde Liegende Problemstellung wird durch die Merkmale des Patentanpruchs gelöst.

Die Erfindung hat nicht nur den besonderen Vorteil, dass die oben erwähnte Überdimensionierung des Glättungskondensators K in der Schaltungsanordnung nach Fig. 1 vermieden werden kann, sondern vor allem den zunehmend restriktiven Vorschriften über zulässige Stromoberwellen des Netzes besser entsprochen werden kann, die zumindest zum Teil durch die erwähnte erforderliche Überdimensionierung des Glättungskondensators K verursacht sein können.

Die Erfindung und vorteilhafte Einzelheiten werden nachfolgend anhand eines Ausführungsbeispieles mit Bezug auf die Zeichnung näher erläutert.

Es zeigen:
- **Fig. 1**: eine bereits erläuterte bekannte Gleichstromspeiseschaltung für Induktivitäten: und
- **Fig. 2**: eine gemäß der Erfindung gestaltete und abgeänderte Gleichstromspeiseschaltung für Induktivitäten.

Wie die Schaltung nach Fig. 2 erkennen lässt, ist der Kondensator K aus Fig. 1 in zwei Kapazitäten K1, K2 aufgeteilt. Der für die Glättung und auch für die Stromoberwellen im Netz verantwortliche Teil K1 ist unverändert an der Stelle des bisherigen Kondensators K verblieben, während der andere Teil K2, der zur Übernahme der Abmagnetisierungsenergie aus der induktiven Last L dient, unmittelbar an die auch als "Abmagnetisierungsdiode" zu bezeichnende zweite Diode D2 angeschlossen ist und also parallel liegt zur zweiten Halbbrückendiagonale, gebildet aus der Reihenschaltung der zweiten Diode D2 und dem zweiten gesteuerten Halbleiterschalter V2, die unverändert in der auch schon in Fig. 1 angegebenen Polung vorhanden sind. Bei der Schaltung nach Fig. 2 ist weiterhin der Verbindungspunkt A zwischen der zweiten Diode D2 und dem ersten Kondensator K1 vor dem Einspeisepunkt des Zwischenkreises durch eine zusätzliche, als Entkopplungsdiode bezeichnete dritte Diode D3 entkoppelt, die so gepolt ist, dass der Zwischenkreis nicht in die zweite Kapazität K2 einspeisen kann, andererseits aber die Kapazität des Kondensators K2 in den Zwischenkreis "überlaufen" kann. Durch diese erfindungsgemäße Schaltungsmaßnahme hat der die Abmagnetisierungsenergie der induktiven Last L übernehmende Kondensator K2 keine Glättungsfunktion mehr und verursacht dementsprechend auch keine Oberwellen im Netz. Dieser zweite Kondensator K2 gibt die Abmagnetisierungsenergie jedoch immer dann ab, wenn die Halbleiterschalter V1, V2 wieder einschalten und die Kondensatorspannung am Kondensator K1 kleiner wird als die Spannung am Kondensator K2. Bedingt durch die Polung der dritten Diode D3 beteiligt sich der Glättungskondensator K1 aber weiterhin an der Energieaufnahme beim Abmagnetisierungsvorgang, jedoch nur soweit die Spannung an ihm geringer ist als die am Kondensator K2.

Ein zusätzlicher, jedoch für einige Anwendungen besonders vorteilhafter Effekt der erfindungsgemäßen Schaltung nach Fig. 2 ist die Unterdrückung von hohen Einschaltströmen durch hohe Glättungskapazitäten, wie sie aus den oben erläuterten Gründen bisher erforderlich waren, so dass gegebenenfalls auf besondere Ladeschaltungen verzichtet werden kann.

## Patentansprüche

1. Gleichstromspeiseschaltung für Induktivitäten in Form einer Brückenschaltung mit einem Gleichrichter (G) mit gleichstomseitigem Glättungskondensator (K2) über der einen, ersten Brückendiagonale (A, 2) und einer induktiven Last (L) über der anderen, zweiten Brückendiagonale (3, 4), wobei zwei zwischen den Polen des Glättungskondensators (K2) liegende Halbbrückenzweige existieren, von denen der eine Brückenzweig (V1, D1) aus einer Reihenschaltung eines ersten steuerbaren Ventils (V1) und einer bezüglich einer Stromflussrichtung vom positiven zum negativen Pol des Gleichrichters in Sperrrichtung liegenden ersten Diode (D1) besteht und der andere Brückenzweig (D2, V2) aus einer Reihenschaltung eines zweiten steuerbaren Ventils (V2) und einer zweiten in der genannten Stromflussrichtung ebenfalls in Sperrichtung liegenden Diode (D2) besteht,
**dadurch gekennzeichnet, dass**
- ein mit dem positiven Pol des Gleichrichters (G) verbundener Anschlussknoten (A) der beiden Halbbrückenzweige der ersten Brückendiagonale aufgetrennt und dort zwischen die beiden Halbbrückenzweige eine in Bezug auf die genannte Stromflussrichtung in Sperrrichtung gepolte Entkopplungs-Diode (D3) geschaltet ist, und dass
- der Glättungskondensator in zwei getrennte Kapazitäten, (K1, K2) aufgeteilt ist, von denen die eine (K1) als Glättungskapazität die Gleichstromseite des Gleichrichters (G) überbrückt und die andere (K2) parallel an dem durch die Reihenschaltung der zweiten Diode (D2) und dem zweiten steuerbaren Ventil (V2) gebildeten zweiten Halbbrückenzweig angeschlossen ist und gleichzeitig als Rückspeisekondensator zur mindestens teilweisen Übernahme der Abmagnetisierungsenergie der induktiven Last (L) dient.

## Claims

1. DC supply circuit for inductors in the form of a bridge circuit comprising a rectifier (G) with a DC-side smoothing capacitor (K2) across the first bridge diagonal (A, 2) and an inductive load (L) across the other, second bridge diagonal (3, 4), wherein two half bridge branches exist, lying between the poles of the smoothing capacitor (K2), one of said bridge branches (V1, D1) comprising a series connection of a first controllable valve (V1) and a first diode (D1) lying in the non-conducting direction in relation to a current flow direction from the positive to the negative pole of the rectifier and the other bridge branch (D2, V2) comprising a series connection of a second controllable valve (V2) and a second diode (D2) also lying in the non-conducting direction in relation to said current flow direction, **characterised in that**
- a connection node (A) of the two half bridge branches of the first bridge diagonal connected to the positive pole of the rectifier (G) is separated and a decoupling diode (D3) which is poled in the non-conducting direction in relation to said current flow direction is connected there between the two half bridge branches, and that
- the smoothing capacitor is divided into two separate capacitors (K1, K2) of which one (K1) bridges the DC side of the rectifier (G) as a smoothing capacitance and the other (K2) is connected in parallel with the second half bridge branch comprising the series connection of the second diode (D2) and the second controllable valve (V2) and simultaneously serves as an energy recovery capacitor for at least partial absorption of the demagnetising energy of the inductive load (L).

## Revendications

1. Circuit d'alimentation en courant continu pour bobines d'inductance en forme de circuit en pont, comprenant un redresseur (G) avec, côté courant continu, un condensateur de lissage (K2) sur l'une des diagonales de pont, la première (A, 2), et avec une charge inductive (L) sur l'autre diagonale de pont, la seconde (3, 4), deux demi-branches de pont situées entre les pôles du condensateur de lissage (K2) étant prévues, parmi lesquelles l'une des branches de pont (V1, D1) est constituée par un montage en série d'une première soupape commandée (V1) et d'une première diode (D1) implantée dans la direction de blocage par rapport à une direction de flux de courant du pôle positif au pôle négatif du redresseur, et l'autre branche de pont (D2, V2) est constituée par un montage en série d'une seconde soupape commandée (V2) et d'une seconde diode (D2) implantée elle aussi en direction de blocage dans la direction de flux de courant indiquée, **caractérisé en ce qu'**un noeud de raccordement (A), connecté au pôle positif du redresseur (G), des deux demi-branches de pont de la première diagonale de pont est divisé et, à cet endroit, une diode de découplage (D3) polarisée en direction de blocage par rapport à la direction de flux de courant indiquée est insérée entre les deux demi-branches de pont, et **en ce que** le condensateur de lissage est divisé en deux condensateurs séparés (K1, K2) dont l'un (K1) ponte le côté courant continu du redresseur (G) en tant que condensateur de lissage et l'autre (K2) est connecté en parallèle à la seconde demi-branche de pont formée par le montage en série de la deuxième diode (D2) et de la seconde soupape commandée (V2) et sert en même temps de condensateur de rétroaction pour récupérer au moins en partie l'énergie de démagnétisation de la charge inductive (L).
